# EUROPEAN PATENT APPLICATION

(11) **EP 0 767 150 A1**
(43) Date of publication of application: **09.04.1997**
(21) Application number: 96105084.6
(22) Date of filing: 29.03.1996
(51) Int. Cl.: C04B 18/10, C04B 28/08, B09B 3/00

(54) **Method for treating incinerated or molten fly ash**

(30) Priority: 04.10.1995 JP 257860/95
(71) Applicant: Sumikin Kashima Kohka Co., Ltd., Kashima-shi, Ibaraki-ken (JP); SUMITOMO HEAVY INDUSTRIES, LTD., Shinagawa-ku, Tokyo 141 (JP)
(72) Inventor: Yamaguchi, Takashi, c/o SUMIKIN KASHIMA KOHKA CO.,, Kashima-shi, Ibaraki-ken (JP); Sekiguchi, Masao, c/o SUMIKIN KASHIMA KOHKA CO.,, Kashima-shi, Ibaraki-ken (JP); Kawakami, Isamu, c/o SUMITOMO HEAVY IND., LTD., Shinagawa-ku, Tokyo (JP)
(74) Representative: Held, Stephan, Dr.rer.nat., Dipl.-Chem.

(57) **Abstract**

In treatment of incinerated fly ash from an incinerator for waste or molten fly ash from a melting furnace, solidification is conducted in the presence of water by adding finely divided particles of blast furnace slag having a Blaine value of 4000 cm²/g or more to the fly ash.

## Description

### Field of the Invention

The present invention relates to a method for treating incinerated fly ash which is produced by the incineration of waste (including municipal waste as well as industrial waste if otherwise indicated) and a method for treating molten fly ash which is produced in association with melting treatment of either of incinerated ash or fly ash when it is molten in a melting furnace in a melting furnace for reduction in its volume.

### Description of Related Art

Treatment of waste including municipal waste has invited a serious problem due to increase in its volume and difficulty in providing waste landfill sites. This trend is more remarkable in bigger cities.

The total amount of the general disposed waste in Japan was 50,441,000 tons. 36,767,000 tons, which is 72.9% of the total waste was incinerated for treatment. In this case, 5,991,000 tons of incinerated residue was discharged and most of it was buried for disposal. Statistics show that the dumped incinerated residue corresponds 35.6% of the total dumped 1 waste amount.

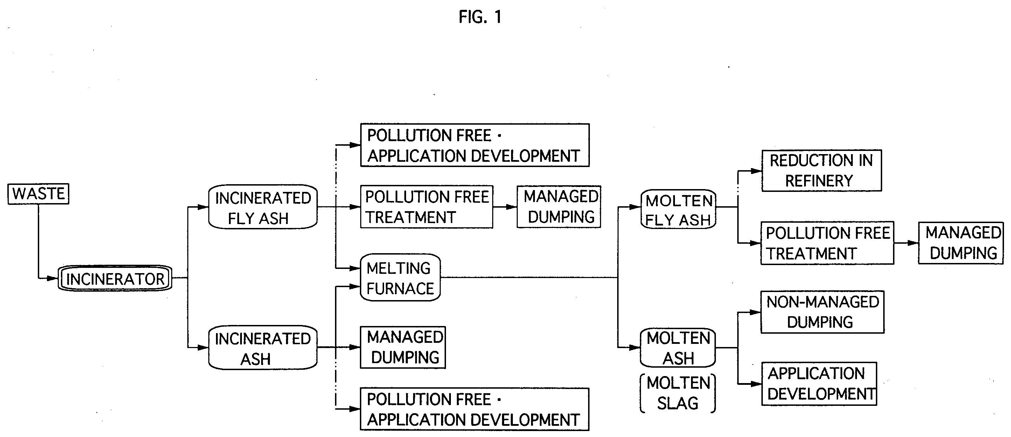

Dumping of such a great amount of incinerated ash invites a serious problem due to small area of the left landfill sites in and around big cities. As is shown in flow chart in Fig. 1, most of self-government of cities and villages dumped incinerated ash in managed final landfill sites.

Incinerated fly ash is specified as specified waste to be managed by recent revision of waste managing regulations. Incinerated fly ash is allowed to be dumped in the managed dumping pits only when it is preliminarily treated in some method for stabilization.

Recently some of the self-government of cities and villages has mixed incinerated ash with incinerated fly ash and molten the mixture for reducing its volume to about a half.

Melting treatment aims at reduction in volume of waste as well as immobilization of heavy metals contained in incinerated ash and fly ash as molten slag (molten ash) to prevent them from discharging. At present time it is hard to say that this melting treatment is advantageous in cost. In order to meet the future need, construction and installation of the melting furnace is conducted in some of cities and villages. The molten slag which is discharged from the melting furnace is so pollution-free that it can be dumped in the non-managed landfill sites.

Since the incinerated fly ash contains a great amount of heavy metals, it can not be dumped for disposal without being treated. Accordingly, it is necessary to preliminarily conduct stabilization treatment such as insolubilization of incinerated fly ash.

Known stabilization method includes carbon dioxide gas neutralization method, method for adding a chemical agent such as chelate agent and kneading, cement solidification method, acid extraction method and fly ash melting method. Among them, themethod for adding a chemical agent as chelate agent and kneading and the cement solidification method are deemed as most prospective and have achieved favorable results.

However, the method using chelate agent is disadvantageous in high cost of chelate agent per se. In contrast to this, the cement solidification method is advantageous in cost while it uses a great amount of cement, resulting in increase in volume of waste, which is against reduction in volume. The latter method is not necessarily excellent in immobilization characteristics of heavy metals.

On the other hand, the molten fly ash contains much harmful heavy metals than incinerated fly ash. It contains a great amount of the residue heavy metals even if stabilization treatment similar to that for incinerated fly ash is conducted. Any stabilization treatment which is effective for the molten fly ash cannot be found. A method for returning to and treating the molten fly ash in metal refinery has been considered. However, achievement of this method is almost impossible in practice since the disposal amount of the molten fly ash is small and treatment of only molten fly ash is unprofitable. Furthermore the heavy metals can not be enough eliminated even if they are refined in refinery.

It is therefore an object of the present invention to provide a method for treating waste with use of a small amount of a solidification agent at a relatively low cost, which can reduce the volume of waste and has excellent immobilization characteristics for heavy metals.

### Summary of the Invention

In a first aspect of the present invention, there is provided a method of treating incinerated fly ash which is produced by the incineration of waste in an incinerator, characterized in that solidification of the incinerated fly ash is achieved in the presence of water by adding 1 to 50 parts by weight of finely divided particles of slag from a blast furnace having a Blaine value of 4000 cm²/g or more to 100 parts by weight of the incinerated fly ash.

Ten parts by weight or less of lime may be further added.

In a second aspect of the present invention, there is also provided a method of treating molten fly ash when one of incinerated ash or fly ash which is produced by the incineration of waste is molten in a melting furnace in an incinerator to reduce its volume, characterized in that solidification of the incinerated fly ash is achieved in the presence of water by adding 10 to 100 parts by weight of finely divided particles of slag from a blast furnace having a Blaine value of 4000 cm²/g or more to 100 parts by weight of the fly ash.

Twenty parts by weight or less of lime may be further added.

Cement may be added as a solidifying agent.

Solidification treatment may be conducted by steam curing or autoclave curing.

In the present invention, finely divided particles of blast furnace slag having a Blaine value of 4000 cm²/g is used as a solidifying agent. Accordingly, the solidified mass becomes more dense and excellent in heavy metals immobilization characteristics as will be apparent from the description of the Examples.

### Description of the Invention

The method of the present invention treats incinerated fly ash which is produced when waste is incinerated in an incinerating furnace or treats molten fly ash which is produced in a melting furnace when at least one of incinerated ash and incinerated fly ash is molten in a melting furnace for reduction in its volume as shown in Fig. 1.

The present invention does not limit the type of the incinerating furnace in which incinerated fly ash is produced. An object to be treated in both neutral fly ash and alkaline fly ash to which calcium hydroxide is blown.

In the present invention, solidification of incinerated fly ash is achieved in the presence of water by adding 1 to 50 parts by weight of finely divided particles of slag having a Blaine value of 4000 cm²/g or more to 100 parts by weight of incinerated fly ash.

On the other hand, one or both of the incinerated ash or incinerated fly ash are molten for treatment in the melting furnace.

The melting treatment can be conducted in a known melting furnace. In other words, various furnaces may be used such as surface melting furnace using a rotary furnace or combined furnace; electric melting furnace using arc heating, cokes bed furnace heated with cokes, electric melting furnace using plasma heating and electric melting furnace using resistance heating.

For treating the molten fly ash, solidification of the fly ash is achieved in the presence of water by adding 100 to 1000 parts by weight, more preferably 20 to 50 parts by weight of finely divided particles of slag having a Blaine value of 4000 cm²/g or more to 100 parts by weight of molten fly ash.

For treating the molten ash, solidification of the ash is achieved in the presence of water by adding 100 to 1000 parts by weight, more preferably 20 to 50 parts by weight of finely divided particles of slag having a Blaine value of 4000 cm²/g or more to 100 parts by weight of molten fly ash.

If used finely divided particles of slag has a small Blaine value in solidification of incinerated fly ash or molten fly ash, a resultant mass of solidified ash would not have an enough denseness so that there is the risk of leaching of heavy metals. The denseness of solidified mass increases as the Blaine value increases. There is a difficulty in economy. Accordingly, although the upper limit of the Blaine value is not limited, it is practically preferable that the upper and lower limits be 20000 cm²/g and 6000 cm²/g, respectively.

When the amount of the added finely divided particles of blast furnace slag is less, the solidification characteristics are not excellent and it is hard to obtain dense solidified ash. If the amount of the added slag particle is excessively high, the effect per se would be saturated and the cost becomes higher and reduction in volume can not be achieved.

In order to promote the reaction of finely divided particle of blast furnace slag, lime may be used as an alkaline stimulating agent. Although slaked lime is preferable in cost, unslaked lime may be used. 10 parts by weight or less of lime may be added for treatment of incinerated fly ash and 20 parts by weight or less of lime may be added for the treatment of molten fly ash. Excessive lime will suppress the denseness of the solidified ash.

A proper amount of water is added to the ash and the mixture is kneaded or granulated by means of a kneader and a granuler making machine or a kneading and granule making machine having both functions. Thereafter, the mixture or the granules are cured in air. Solidification may be promoted by steam curing.

Double-axis paddle mixer may be used as the kneader. Rolling and pressing granule making machine, extrusion granule making machine, pelletizer may be used as granule making machine. Bread type kneading and granule making machine, oscillation kneading and granule making machine may be used as a combined kneading and granule making machine.

Cement may be added in lieu of lime or together with cement. It is preferable to use finely divided cement having a Blaine value of about 1000 to 5000 cm²/g in order to provide an enough denseness. The amount of the added cement is preferably 40 % or less for the finely divided particles of blast furnace slag in any cases.

Promotion of solidification by steam curing or autoclave curing as well as curing in air is preferable in reduction in curing preserving space in landfill sites.

In practice, if promotion of solidification is achieved by steam curing in accordance with a known method in a temperature range of about 60 to 180°C, the strength after 2 days was 5 kgf/cm², which is substantially equivalent to the strength after 4 weeks and the heavy metal containing characteristics which are substantially equivalent to those after 4 weeks are obtained.

The resultant solidified masses can be disposed at waste final landfill sites and can be used as road bed material, reclaiming material, etc. in various construction sites.

### Examples

Now, the present invention will be described in detail by way of examples.

### Treatment of incinerated fly ash

### Experiment 1

Alkaline incinerated fly ash A which was collected by a bag filter precipitator in an operating stoker type incinerating facility was solidified. Analysis values of incinerated fly ash are shown in Table 1. The result of Leaching Test which conforms to "Notification No. 13 of Environment Agency" is shown in Table 2 together with regulation values.

**TABLE 1**

| COMPONENT S | (%) | COMPONENT S | (mg/kg) |
|---|---|---|---|
| SiO₂ | 9.6 | O-P | <0.5 |
| CaO | 44.3 | T-Cr | 150 |
| Al₂O₃ | 4.4 | As | 5.6 |
| Fe₂O₃ | 0.55 | Pb | 1200 |
| K | 3.4 | Zn | 3600 |
| Mn | 0.086 | Cd | 28 |
| Cl | 17.5 | Cu | 630 |
| S | 2.2 | Ni | 37 |
| Na | 3.2 | T-Hg | 3.4 |
| Mg | 0.74 | CN | <0.25 |

**TABLE 2**

| ANALYZED COMPONENT S | LEACHING AMOUNT | REGULATED VALUE |
|---|---|---|
| Cd | <0.005 | <0.3 |
| Pb | 36 | <0.3 |
| Cr⁶⁺ | <0.02 | <1.5 |
| T-Cr | 0.1 | ― |
| T-Hg | 0.0026 | <0.005 |
| pH | 12.3 | ― |
| (UNIT : mg/ℓ) | | |

Solidification of incinerated fly ash B which was collected in different day was conducted under the same conditions by addition of only water. The amount of leaching of lead which was determined in accordance with "Notification No. 13 of Environment Agency" is shown in Table 3. The content of the lead in original incinerated fly ash which was collected on a different day is 1163 mg/kg.

**TABLE 3**

| AMOUNT OF ADDED WATER (OUTSIDE RATIO TO ORIGINAL ASH) | | | | |
|---|---|---|---|---|
| 0% | 35% | 50% | 35% | 50% |
| | 3 DAY CURING | 3 DAY CURING | 30 DAY CURING | 30 DAY CURING |
| 37.0 (12.5) | 5.3 (12.1) | 6.8 (12.2) | 3.9 (12.3) | 1.9 (12.2) |
| (UNIT : mg/ℓ) LEAD LEACHING AMOUNT, () DENOTES pH OF LEACHATE | | | | |

The result shows that the amount of the leaching of lead from the incinerated fly ash can not pass the regulation value and that although solidification of the ash is accomplished by addition of water, the regulated value can not be passed.

### Experiment 2

It is found from the above-mentioned results that the amount of the leaching of lead should be reduced. Therefore, the inventors have conducted various experiments to study how in the leaching of lead can be reduced. Leaching Test of the treated incinerated fly ash B is conducted by using a chelate agent K, the effect of which has been confirmed. The experiments was mainly conducted to determine how the leaching is correlated with the amount of the added chelate agent K. The result is shown in Table 4.

**TABLE 4**

| ANALYZED COMPONENT S | SINGLE CHELATE AGENT K | | |
|---|---|---|---|
| | 3% | 5% | 10% |
| Cd | <0.005 | ― | ― |
| Pb | 0.1 | 0.09 | <0.05 |
| T-Cr | 0.1 | 0.05 | ― |
| T-Hg | <0.0005 | ― | ― |
| pH | 12.5 | 12.2 | 12.5 |
| (UNIT : mg/ℓ) | | | |

The result shows that use of chelate agent K is effective and that the regulated value can be passed if about 3 % or more of the chelate agent K is added.

Leaching Test in which solidification is conducted by using cement together with chelate agent K was conducted. The result is shown in Table 5.

**TABLE 5**

| | | CEMENT10% | CEMENT10% + CHELATE K 3% | CEMENT10% + CHELATE K 5% |
|---|---|---|---|---|
| 15 DAY CURIN G | Pb | 1.7 | 0.2 | 0.1 |
| | T―Cr | 0.15 | 0.09 | ― |
| | T―Hg | <0.0005 | ― | ― |
| | pH | 12.6 | 12.4 | 12.4 |
| 30 DAY CURIN G | Pb | 1.7 | 0.08 | <0.05 |
| | pH | 12.4 | 12.4 | 12.4 |
| (UNIT : mg/ℓ) | | | | |

Comparison of the result shown in Table 5 with that in Table 4 shows that the solidification characteristics depending upon cement can not be substantially expected and that they solely depend upon the chelate agent K. As the curing period time becomes longer, the amount of leaching of lead is positively reduced.

### Experiment 3

In order to reduce the amount of the leaching of lead to a target value in accordance with Experiment 2, it is necessary to add 3 % or more of expensive chelate agent K. Determination was made whether substantially same lead immobilization characteristics can be obtained by addition of the other solidifying agent.

Solidification of the incinerated fly ash B was conducted by adding it with cement, finely divided particles of blast furnace slag X having a Blaine value of 4400 cm²/g; finely divided particles of slag Y having a Blaine value of 8000 cm²/g and finely divided particles of blast furnace Z having a Blaine value of 17000 cm²/g. The results of leaching of lead after curing in atmosphere for 3 and 30 days was achieved are shown in Tables 6 and 7, respectively.

**TABLE 6**

| | AMOUNT OF ADDED CHEMICALS (OUTSIDE RATIO TO ORIGINAL ASH) | | | | |
|---|---|---|---|---|---|
| | 10% | 15% | 20% | 25% | 30% |
| CEMENT | 1.3 (12.4) | 1.0 (12.3) | 0.67 (12.3) | 0.41 (12.2) | 0.39 (12.2) |
| SLAG X | 5.7 (12.4) | 4.5 (12.4) | 4.3 (12.3) | 3.3 (12.3) | 2.8 (12.2) |
| SLAG Y | 2.4 (12.4) | 1.2 (12.4) | 0.99 (12.3) | 0.79 (12.3) | 0.34 (12.2) |
| SLAG Z | 0.52 (12.6) | ― | 0.16 (12.7) | ― | 0.09 (12.6) |
| (UNIT : mg/ℓ) CURING PERIOD 3 DAYS ORIGINAL ASH : 200 g, ADDED WATER : 100 g LEAD LEACHING AMOUNT, ( ) DENOTES pH OF LEACHATE | | | | | |

**TABLE 7**

| | AMOUNT OF ADDED CHEMICALS (OUTSIDE RATIO TO ORIGINAL ASH) | | | | |
|---|---|---|---|---|---|
| | 10% | 15% | 20% | 25% | 30% |
| CEMENT | 0.5 (12.3) | 0.27 (12.2) | 0.25 (12.2) | 0.21 (12.2) | 0.11 (12.1) |
| SLAG X | 0.31 (12.2) | 0.2 (12.2) | 0.13 (12.1) | 0.11 (12.1) | 0.12 (12.1) |
| SLAG Y | 0.14 (12.2) | 0.06 (12.1) | 0.07 (12.1) | <0.05 (12.1) | <0.05 (12.1) |
| SLAG Z | 0.12 (12.6) | ― | 0.11 (12.7) | ― | <0.05 (12.7) |
| (UNIT : mg/ℓ) CURING PERIOD 30 DAYS ORIGINAL ASH : 200 g, ADDED WATER : 100 g LEAD LEACHING AMOUNT, ( ) DENOTES pH OF LEACHATE | | | | | |

The results show that as the amount of each solidifying material increases, the Blaine value of the finely divided particles of slag increases, the curing period is extended, the effect of preventing the leaching of lead has a tendency to enhance. It is also found that the regulated value is enough passed after 30 day curing if a great amount of the finely divided particles of any slag is added.

It is also understood that effect of reduction in lead leaching due to increase in the amount of addition of the finely divided particles of the slag is liable to be saturated.

### Conclusion

It is found from the above-mentioned results that reduction in lead leaching can be positively achieved by using finely divided particles of blast furnace slag as a solidifying agent. It is also found from comparison of the result of use of the slag particles with that of use of cement that the finely divided particles of blast furnace slag exhibits excellent lead immobilization characteristics.

### Treatment of molten fly ash

### Experiment 4

An experiment of leaching of the treated molten fly ash from an operating blast furnace, which is added with the above-mentioned chelate resin K was conducted. It was conducted under a condition of high pH by adding calcium hydroxide since pH of the molten fly ash is 4 to 5. Influence of changes in the amount of added chelate agent was determined. The result is shown in Table 8.

**TABLE 8**

| ANALYZED COMPONENT S | CONTENT (mg/ℓ) | AMOUNT OF ADDED CHELATE AGENT K | | | | | |
|---|---|---|---|---|---|---|---|
| | | 0% | 1% | 2% | 3% | 5% | 8% |
| CADMIUM | 91 | <0.01 | <0.01 | <0.01 | <0.01 | <0.01 | <0.01 |
| LEAD | 8600 | 140 | 150 | 120 | 120 | 130 | 110 |
| ZINC | 12000 | 0.66 | 1.86 | 1.54 | 1.16 | 1.26 | 1.68 |
| OVERALL CHROMIUM | 25 | 0.25 | 0.18 | 0.16 | 0.14 | 0.14 | 0.18 |
| TOTAL MERCURY | <0.1 | ― | ― | ― | ― | ― | ― |
| ELUATE pH | ― | 12.3 | 12.3 | 12.4 | 12.4 | 12.4 | 12.4 |
| (UNIT : mg/ℓ) | | | | | | | |

It can be estimated from comparison of the result with values shown in Table 1 in consideration of the contents of cadmium, lead and chromium that the molten fly ash is more than incinerated fly ash in amount and it is harder to treat the former than the latter.

Accordingly, leaching of lead from the incinerated fly ash can be enough suppressed by addition of only 3 % of chelate resin K. In contrast to this, the leaching of lead from the molten fly ash was suppressed to 120 mg/l even by addition of 3 % of chelate resin K. It is found that the molten fly ash can not be treated even by using chelate resin K.

### Experiment 5

A chelate agent K which is different from the chelate agent K used in Experiment 4 is used. Solidifying method using cement and their combined effect was determined. The result is shown in Table 9.

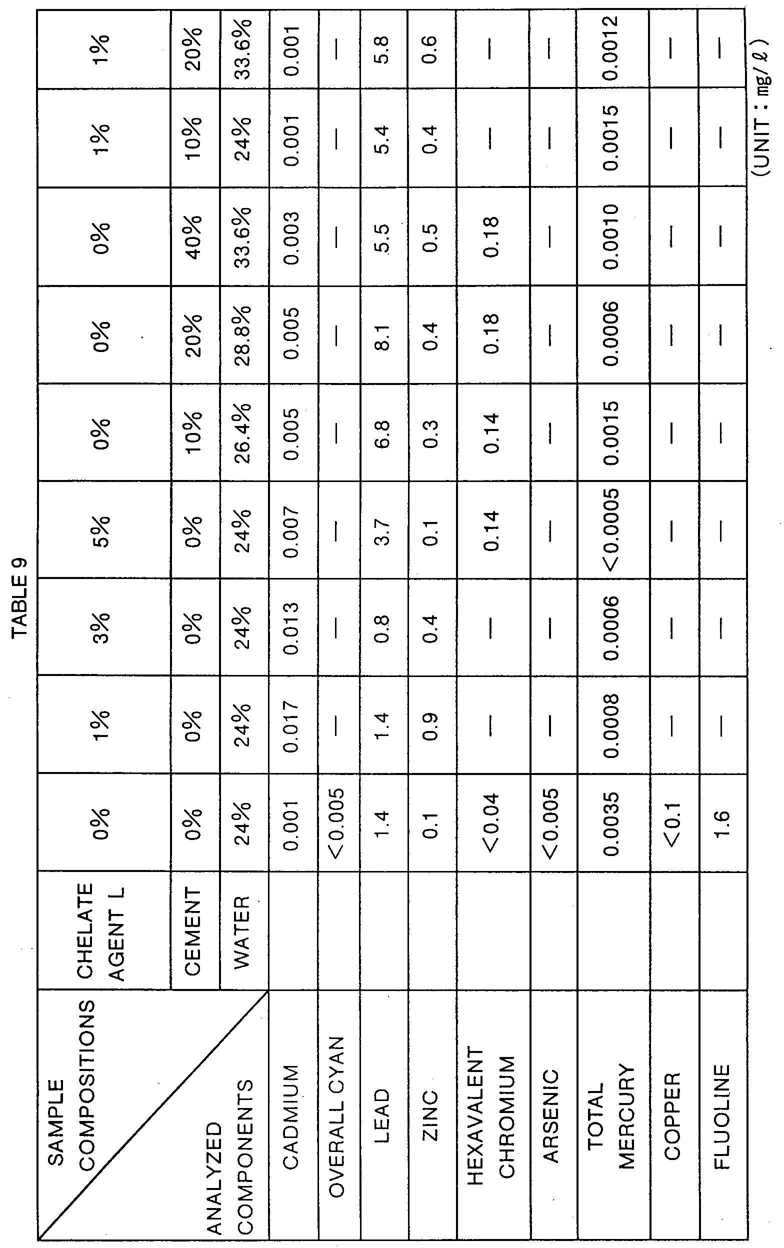

The result shows that although some effect is exhibited by change in the type of the chelate agent in comparison with the chelate agent with the chelate agent used in Experiment 1, the regulated value cannot be passed and that immobilization by using cement has less effect.

### EXPERIMENT 6

In view of the fact that it is difficult to prevent the leaching of lead even if different chelate agents are used in the above-mentioned Experiments 4 and 5, the immobilization characteristics of various solidifying materials was studied in connection with the amount of lead leaching by using the finely divided particles of slag, the effectiveness for incinerated fly ash, of which has been confirmed the finely divided particles of furnace slag having a Blaine value of 8000 cm²/g Y and that having a Blaine value of 17000 cm²/g Z were used. An experiment of leaching of various heavy metals is conducted in combination shown in Table 10 in order to study the effect when cement is used together.

Difference in the period of curing was studied. The result is shown in Table 11. Specimens had a size of 50 mmx100 mm.

**TABLE 10**

| No. | BINDER COMPOSITION | | | | MOLTEN FLY ASH | | | WATER | TOTAL*3 |
|---|---|---|---|---|---|---|---|---|---|
| | CEMEN T | SLAG | | TOTAL | AMOUNT | RATIO*1 | RATIO*2 | | |
| | | Y | Z | | | | | | |
| 1 | 25 | 25 | 0 | 50 | 50 | 0.5 | 2.72 | 36 | 136 |
| 2 | 15 | 35 | 0 | 50 | 50 | 0.5 | 2.72 | 36 | 136 |
| 3 | 5 | 45 | 0 | 50 | 50 | 0.5 | 2.72 | 36 | 136 |
| 4 | 0 | 50 | 0 | 50 | 50 | 0.5 | 2.72 | 36 | 136 |
| 5 | 15 | 15 | 0 | 30 | 70 | 0.7 | 1.94 | 36 | 136 |
| 6 | 5 | 5 | 0 | 10 | 30 | 0.9 | 1.51 | 36 | 136 |
| 7 | 50 | 0 | 0 | 50 | 50 | 0.5 | 2.72 | 36 | 136 |
| 8 | 30 | 0 | 0 | 30 | 70 | 0.7 | 1.94 | 36 | 136 |
| 9 | 25 | 0 | 25 | 50 | 50 | 0.5 | 2.72 | 36 | 136 |
| 10 | 15 | 0 | 15 | 30 | 70 | 0.7 | 1.94 | 36 | 136 |
| 11 | 15 | 15 | 0 | 30 | 70 | 0.7 | 2.01 | 43 | 141 |
| 12 | 15 | 15 | 0 | 30 | 70 | 0.7 | 2.09 | 46 | 146 |

| | | | | | | | | | |
|---|---|---|---|---|---|---|---|---|---|
| *1 MOLTEN FLY ASH ÷ (MOLTEN FLY ASH + BINDER) | | | | | | | | | |
| *2 (MOLTEN FLY ASH + BINDER + WATER) ÷ MOLTEN FLY ASH | | | | | | | | | |
| *3 MOLTEN FLY ASH + BINDER + WATER | | | | | | | | | |

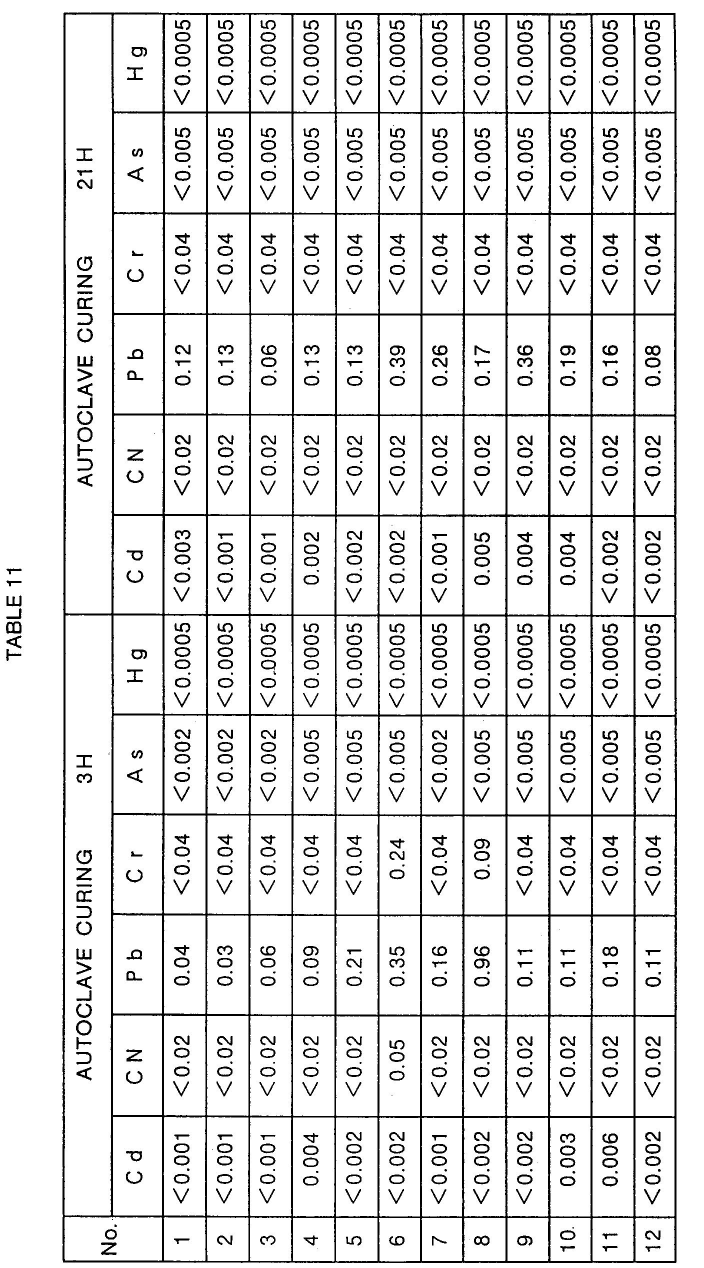

The following was found from the result.
1. Molten fly ash; It is found from Experiments 7, 1, 2, 3, 4 in which the ratio of the fly ash to coupling agent is 1:1 that leaching prevention effect is high even if cement is not used. It is deemed that the fly ash will be solidified enough since the molten fly ash contains calcium hydroxide as an alkaline stimulating agent.
2. Difference in influence in different Blaine values is determined by comparing Experiments 7, 1, 9 with Experiments 8, 5, 10. There is not great difference between the effects of finely divided particles of slag having 8000 cm²/g and 17000 cm²/g.
3. Study of influence of the amount of water in kneading in connection with experiments 5, 11, 12 shown that leaching suppress effect enhances as the amount of water in kneading in creases.
4. It is determined from Experiments 1, 5, 6 that about 10 to 30 % of finely divided particles of slag to be added is enough to suppress the amount of leaching of lead to less than 0.3 mg/l.
5. Difference between the effects of autoclave curing period of time of 3 and 21 hours is slight. It is deemed that the effect is saturated in 3 hours. Autoclave curing period of time of 3 hours is enough.
6. It is apparent from the results of Experiments 7 and 8 that the present method is effective only when much cement is added. comparison of these effects of Experiments 7 and 8 shows that use of finely divided particles of slag is more effective than that of cement. The inventive method is effective without using any cement.

As mentioned above, in accordance with the present invention, treatment of incinerated or molten fly ash can be conducted at a comparatively low cost by using a small amount of solidifying agent and reduction in volume of fly ash can be achieved. The present invention provides a method of treating incinerated or molten fly ash which is excellent in heavy metal immobilization characteristics.

## Claims

1. A method of treating incinerated fly ash which is produced by the incineration of waste in an incinerator, characterized in that solidification of the incinerated fly ash is achieved in the presence of water by adding 1 to 50 parts by weight of finely divided particles of slag from a blast furnace having a Blaine value of 4000 cm²/g or more to 100 parts by weight of the incinerated fly ash.

2. A method of treating the incinerated fly ash as defined in Claim 1 in which 10 parts by weight or less of lime is further added.

3. A method of treating molten fly ash when one of incinerated ash or fly ash which is produced by the incineration of waste is molten in a melting furnace in an incinerator to reduce its volume, characterized in that solidification of the incinerated fly ash is achieved in the presence of water by adding 10 to 100 parts by weight of finely divided particles of slag from a blast furnace having a Blaine value of 4000 cm²/g or more to 100 parts by weight of the fly ash.

4. A method of treating molten fly ash as defined in Claim 3 in which 20 parts by weight or less of lime is further added.

5. A method as defined in any one of Claims 1 to 4 in which cement is added as a solidifying agent.

6. A method as defined in any one of Claims 1 to 5 in which solidification treatment is conducted by steam curing or autoclave curing.
